# EUROPEAN PATENT APPLICATION

(11) **EP 3 670 058 A1**
(43) Date of publication of application: **24.06.2020**
(21) Application number: 19020040.2
(22) Date of filing: 22.01.2019
(51) Int. Cl.: B23K 10/00, H05H 1/36

(54) **PLASMA CUTTING METHOD AND APPARATUS**

(30) Priority: 17.12.2018 GB 201820534
(71) Applicant: Linde GmbH, 82049 Pullach (DE)
(72) Inventor: Hussary, Nakhleh A., 85737 Ismaning (DE)
(74) Representative: Lu, Jing

(57) **Abstract**

The invention relates to a method of cutting a workpiece (40) by means of a plasma arc (2), wherein a device (1) for cutting a workpiece (40) is provided, a pre gas flow is provided around the electrode (11), subsequently to the pre gas flow, a main gas flow (32) is provided around the electrode (11), wherein the main gas flow (32) comprises an oxidizing gas, a plasma arc (2) is generated between the electrode (11) and the workpiece (40), wherein said workpiece (40) is cut by means of said plasma arc (2), and wherein said pre gas flow comprises an oxidizing gas at a concentration of 50 ppm to 10000 ppm. The invention further relates to a device (1) for cutting a workpiece (40).

## Description

The invention relates to a method and a device for cutting a workpiece by means of a plasma arc, particularly for cutting metals and metal alloys, more particularly mild steel cutting.

Plasma cutting methods for metals using plasma torches are known from the prior art. Therein, a plasma arc is typically generated by applying a voltage to an electrode which is centrally positioned in a nozzle. In the nozzle, a working gas is typically provided, in which the plasma arc is ignited.

In plasma cutting, particularly of mild steel, the presence of high concentrations of oxygen significantly improves speed and quality of the cutting process. However, the electrode, being at the heart of the plasma cutting process, does not survive long in an oxygen plasma arc.

Use of zirconium and hafnium as electrode materials increase electrode life when using air or oxygen as the plasma forming gas. However, the life of the electrode still remains relatively low. As expected, the life in air is higher than in oxygen due to the lower oxygen content.

A number of documents of the prior art relate to finding a compromise of using mixtures of oxygen and nitrogen to balance electrode life, cutting speed and cutting quality.

Furthermore, some improvements in the manufacturability and heat load management on the electrode have been introduced.

For example, use of a pre-gas flow during the starting phase and a post-gas flow during the stopping phase of the process using non-oxidative gases has been described (see for example document US 6,248,972 B1).

However, the use of non-oxidative gases in the pre gas flow decreases starting reliability of the plasma arc.

Therefore, the objective of the present invention is to provide a method for cutting a workpiece by means of a plasma arc that is improved in view of the disadvantages of the prior art, in particular to provide a method for cutting a workpiece by means of a plasma arc with increased electrode life and an acceptable starting reliability.

A first aspect of the invention relates to a method for cutting a workpiece by means of a plasma arc, wherein
- a device for cutting a workpiece comprising an electrode for generating a plasma arc and a gas supply system for providing a gas flow around the electrode is provided, wherein
- a pre gas flow is provided around the electrode,
- subsequently to the pre gas flow, a main gas flow is provided around the electrode, wherein the main gas flow comprises an oxidizing gas at a concentration above 10000 ppm,
- a plasma arc is generated between the electrode and the workpiece, wherein the workpiece is cut by means of the plasma arc, wherein the pre gas flow comprises an oxidizing gas at a concentration of 50 ppm to 10000 ppm.

This concentration range of oxidizing gas in the pre gas flow results in an improved electrode life while providing good starting reliability.

In the context of the present specification, the term pre gas flow describes a gas flow comprising an oxidizing gas at a concentration of 50 ppm to 10000 ppm, which is provided during starting (in other words ignition) of the plasma arc, such that damage to the electrode is reduced due to the relatively low oxidant concentration. During ignition, the plasma arc may be formed between the electrode and a further component of the device according to the invention, such as an internal wall of a conduit, in which the electrode is positioned.

Furthermore, in the context of the present specification, the term main gas flow describes a gas flow comprising an oxidizing gas at a concentration above 10000 ppm, which is provided subsequently to the pre gas flow, in particular during cutting of a workpiece by means of the plasma arc. The oxidizing gas concentration in the main gas flow is higher than in the pre gas flow to improve the efficiency of the cutting process. In case the plasma arc has been formed between the electrode and a further component of the device, the plasma arc is transferred to a workpiece at the time when the main gas flow is introduced (or shortly before or shortly after).

The term post gas flow, in the context of this specification, describes a gas flow comprising an oxidizing gas at a concentration of 50 ppm to 10000 ppm, which is provided during stopping of the plasma arc, such that damage to the electrode is reduced due to the relatively low oxidant concentration.

The workpiece is particularly formed from mild steel.

In certain embodiments, subsequently to the main gas flow, a post gas flow is provided around the electrode, wherein the post gas flow comprises an oxidizing gas at a concentration of 50 ppm to 10000 ppm.

In certain embodiments, the concentration of the oxidizing gas in the pre gas flow and/or the post gas flow is 50 ppm to 9500 ppm, 50 ppm to 9000 ppm, 50 ppm to 8500 ppm, 50 ppm to 8000 ppm, 50 ppm to 7500 ppm, 50 ppm to 7000 ppm, 50 ppm to 6500 ppm, 50 ppm to 6000 ppm, or 50 ppm to 5500 ppm.

In certain embodiments, the concentration of the oxidizing gas in the pre gas flow is 50 ppm to 5000 ppm.

In certain embodiments, the concentration of the oxidizing gas in the post gas flow is 50 ppm to 5000 ppm.

In certain embodiments, the concentration of the oxidizing gas in the pre gas flow is 50 ppm to 5000 ppm and the concentration of the oxidizing gas in the post gas flow is 50 ppm to 5000 ppm.

In certain embodiments, the concentration of the oxidizing gas in the pre gas flow and/or the post gas flow is 50 ppm to 4500 ppm, 50 ppm to 4000 ppm, 50 ppm to 3500 ppm, 50 ppm to 3000 ppm, 50 ppm to 2500 ppm, 50 ppm to 2000 ppm, 50 ppm to 1500 ppm, 50 ppm to 1000 ppm, 50 ppm to 900 ppm, 50 ppm to 800 ppm, 50 ppm to 700 ppm, 50 ppm to 600 ppm, 50 ppm to 500 ppm, 50 ppm to 450 ppm, 50 ppm to 400 ppm, 50 ppm to 350 ppm, 50 ppm to 300 ppm, 50 ppm to 250 ppm, 50 ppm to 200 ppm, 50 ppm to 150 ppm, or 50 ppm to 100 ppm.

In certain embodiments, the concentration of the oxidizing gas in the pre gas flow and/or the post gas flow is 50 ppm to 5000 ppm, 100 ppm to 5000 ppm, 150 ppm to 5000 ppm, 200 ppm to 5000 ppm, 250 ppm to 5000 ppm, 300 ppm to 5000 ppm, 350 ppm to 5000 ppm, 400 ppm to 5000 ppm, 450 ppm to 5000 ppm, 500 ppm to 5000 ppm, 600 ppm to 5000 ppm, 700 ppm to 5000 ppm, 800 ppm to 5000 ppm, 900 ppm to 5000 ppm, 1000 ppm to 5000 ppm, 1500 ppm to 5000 ppm, 2000 ppm to 5000 ppm, 2500 ppm to 5000 ppm, 3000 ppm to 5000 ppm, 3500 ppm to 5000 ppm, 4000 ppm to 5000 ppm, or 4500 ppm to 5000 ppm.

In certain embodiments, the concentration of the oxidizing gas in the pre gas flow and/or the post gas flow is 50 ppm to 5000 ppm, 100 ppm to 4500 ppm, 150 ppm to 4000 ppm, 200 ppm to 3500 ppm, 250 ppm to 3000 ppm, 300 ppm to 2500 ppm, 350 ppm to 2000 ppm, 400 ppm to 1500 ppm, 450 ppm to 1000 ppm, 500 ppm to 900 ppm, or 600 ppm to 800 ppm.

In certain embodiments, the concentration of the oxidizing gas in the pre gas flow is 100 ppm to 1500 ppm.

In certain embodiments, the concentration of the oxidizing gas in the post gas flow is 100 ppm to 1500 ppm.

In certain embodiments, the concentration of the oxidizing gas in the pre gas flow is 100 ppm to 1500 ppm and the concentration of the oxidizing gas in the post gas flow is 100 ppm to 1500 ppm.

In certain embodiments, the oxidizing gas of the pre gas flow, the post gas flow and/or the main gas flow is selected from the group consisting of oxygen (O₂), nitrogen monoxide (NO), nitrogen dioxide (NO₂), and ozone (O₃).

In certain embodiments, the oxidizing gas of the pre gas flow, the post gas flow and/or the main gas flow is oxygen (O₂).

In certain embodiments, the pre gas flow further comprises an inert gas.

In certain embodiments, the post gas flow further comprises an inert gas.

In certain embodiments, the pre gas flow further comprises an inert gas, and the post gas flow further comprises an inert gas.

In certain embodiments, the inert gas is nitrogen (N₂) or argon (Ar).

In certain embodiments, the electrode comprises an emissive element, wherein the emissive element is formed from hafnium, a hafnium alloy, zirconium, or a zirconium alloy.

In certain embodiments, a current is provided at the electrode, wherein the current is 30 A to 400 A, wherein the concentration of the oxidizing gas in the pre gas flow and/or the post gas flow is 50 ppm to 1500 ppm, or wherein the current is 200 A to 600 A, wherein the concentration of the oxidizing gas in the pre gas flow and/or the post gas flow is 500 ppm to 10000 ppm.

In particular, while the pre gas flow is provided, the current being provided at the electrode is a current between the electrode and an inner wall of a conduit of the device which gets transferred to the workpiece for cutting, wherein the electrode is positioned in the conduit.

In particular, while the main gas flow or the post gas flow is provided, the current being provided at the electrode is a current between the electrode and a workpiece being cut by the device.

In certain embodiments, the current is increased while the pre gas flow is provided.

In certain embodiments, the current is decreased while the post gas flow is provided.

In certain embodiments, the current is increased while the pre gas flow is provided, and the current is decreased while the post gas flow is provided.

In certain embodiments, the current is increased at a rate of 50 A/s to 800 A/s, wherein the concentration of the oxidizing gas in the pre gas flow is 50 ppm to 5000 ppm, or the current is increased at a rate of 300 A/s to 1000 A/s, wherein the concentration of the oxidizing gas in the pre gas flow is 500 ppm to 10000 ppm.

In certain embodiments, the current is decreased at a rate of 100 A/s to 600 A/s, wherein the concentration of the oxidizing gas in the post gas flow is 50 ppm to 5000 ppm, or the current is decreased at a rate of 300 A/s to 1000 A/s, wherein the concentration of the oxidizing gas in the post gas flow is 500 ppm to 10000 ppm.

In certain embodiments, the current is increased or decreased according to a linear, non-linear, exponential or polynomial function.

A second aspect of the invention relates to a device for cutting a workpiece, particularly for performing a method according to the first aspect of the invention, wherein the device comprises an electrode for generating a plasma arc and a gas supply system for providing a gas flow around the electrode, wherein the device is adapted to provide a pre gas flow around the electrode, and provide a main gas flow around the electrode subsequently to the pre gas flow, wherein the main gas flow comprises an oxidizing gas at a concentration above 10000 ppm, and wherein the device is adapted to generate a plasma arc between the electrode and a workpiece, wherein the workpiece is cut by means of the plasma arc, and wherein the pre gas flow comprises an oxidizing gas at a concentration of 50 ppm to 10000 ppm.

In certain embodiments, the oxidizing gas of the pre gas flow, the post gas flow and/or the main gas flow is selected from the group consisting of oxygen (O₂), nitrogen monoxide (NO), nitrogen dioxide (NO₂), and ozone (O₃).

In certain embodiments, the oxidizing gas of the pre gas flow, the post gas flow and/or the main gas flow is oxygen (O₂).

In the following, further examples and embodiments of the invention are described with reference to the Figures.

Therein,
- Fig. 1: shows a schematic of a device for cutting a workpiece during a starting phase of the method according to the invention,
- Fig. 2: shows a schematic of a device for cutting a workpiece during a cutting phase of the method according to the invention, wherein a workpiece is cut by a plasma arc generated by the device.

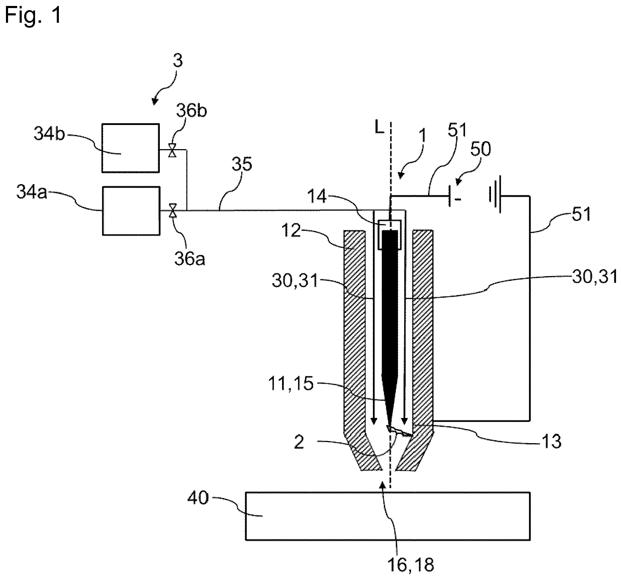

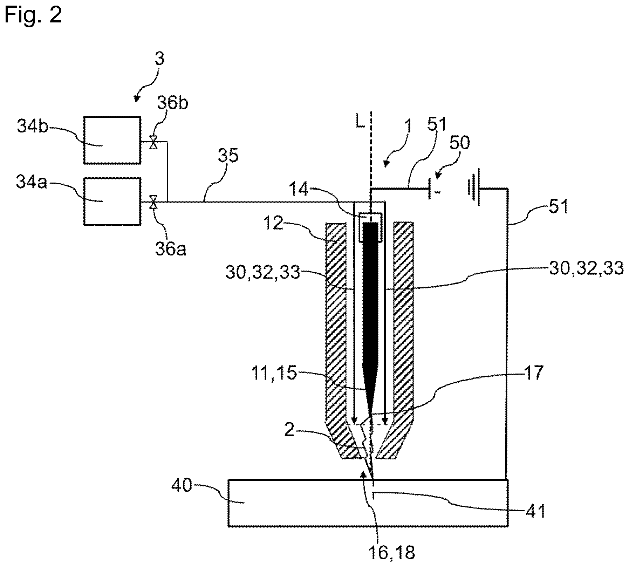

A device 1 for cutting a workpiece 40 according to the present invention is described with reference to Figures 1 and 2 displaying different modes of operation of the same device 1 for cutting a workpiece 40.

Fig. 1 and 2 show a schematic cross-sectional representation of a device 1 for cutting a workpiece 40 comprising a cylindrical conduit 12 (particularly forming a circular cylinder) extended along a longitudinal axis L. The inner diameter of the conduit 12 decreases at a proximal opening 18 of the conduit 12, such that a nozzle 16 is formed.

The device 1 for cutting a workpiece 40 further comprises an electrode 11 which is positioned centrally in the conduit 12 along the longitudinal axis L. The electrode 11 is formed by an emissive insert 15 of a heat resistant material such as hafnium, zirconium or alloys thereof, wherein the emissive insert 15 is removably fixed to an electrically conductive electrode holder 14. By means of the electrode holder 14, the electrode 11 is electrically connected to a voltage source 50 by means of wiring 51, wherein the voltage source 50 is adapted to apply a negative voltage to the electrode 11, such that a plasma arc 2 may be formed by the electrode 11 (acting as a cathode), particularly at the tip 17 of the emissive insert 15.

Furthermore, the conduit 12 is in flow connection with a first gas reservoir 34a and a second gas reservoir 34b via a first valve 36a, a second valve 36b, and a gas line 35, such that a gas flow 30 can be provided in the conduit 12 around the electrode 11. For instance, the gas flow 30 can be established due to a pressure difference between the gas reservoirs 34a, 34b and the surrounding atmosphere which is in flow connection with the conduit 12 by means of the opening 18.

Fig. 1 shows a starting phase of the method according to the invention, wherein a pre gas flow 31 is provided in the conduit 12 around the electrode 11, and an electrical potential difference is established between the electrode 11 and an inner wall of the conduit 12, such that a plasma arc 2 is formed between the electrode 11 and the inner wall 13.

Fig. 2 shows the setup of the device 1 and the workpiece 40 both during a cutting phase of the method according to the invention, wherein the workpiece 40 is cut by the plasma arc 2 and a main gas flow 32 is introduced, and during a stopping phase, wherein the main plasma arc current value is decreased and then shut down, and wherein a post gas flow 33 is introduced.

In particular, when switching from the starting phase shown in Fig. 1 to the cutting phase shown in Fig. 2, an electrical circuit of the device 1 is switched, such that the plasma arc 2 is transferred from the inside of the conduit 12 to the workpiece 40 in the vicinity of the nozzle 16.

In turn, the workpiece 40 is cut at a cutting position 41 by means of the heat generated by the plasma arc 2 during the cutting phase.

According to the present invention, the pre gas flow 31, and in particular also the post gas flow 33, comprises an oxidizing gas, such as oxygen (O₂) at a concentration of 50 ppm to 10000 ppm, whereas in particular, the main gas flow 32 comprises oxygen (O₂) at a concentration above 10000 ppm.

The presence of relatively high concentrations of oxygen (O₂) in the main gas flow 32 during the cutting phase allows high speed and high quality cutting, especially of mild steel. In particular, pure oxygen (O₂) is used for the main gas flow 32 in the cutting phase.

In the pre gas flow 31 and post gas flow 33 during the starting and stopping phase when the plasma arc 2 is established inside the conduit, high concentrations of oxygen (O₂) are not desired in order to increase electrode life.

However, during the starting and stopping phase, low concentrations of oxygen, in the range of 50 ppm to 10000 ppm are advantageous in view of electrode life, in particular due to the effect of oxygen as a surfactant lowering the surface tension of the material of the emissive insert 15, especially at the interface between the emissive insert 15 and the holder 14.

For example, the different composition of the pre gas flow 31 and post gas flow 33 compared to the main gas flow 32 may be realized by means of a gas supply system 3 depicted in Figures 1 to 3. Therein, for example, the first gas reservoir 34a may contain oxygen (O₂) and the second reservoir 34b may contain an inert gas, such as argon (Ar) or nitrogen (N₂).

In particular, the valves 36a,36b are control valves, which allow regulating the flow rate from the first and second gas reservoir 34a,34b, respectively, to the gas line 35. In turn, this allows regulating the relative oxygen and inert gas content of the gas flow 30 established in the conduit 12. In this manner, for example, a pre gas flow 31 and post gas flow 33 comprising an oxygen concentration of 50 ppm to 10000 ppm and a main gas flow 32 consisting of oxygen can be provided in the conduit 12.

In a different embodiment, the pre flow gas and the post flow gas is pre-mixed to the desired value and directly connected to the system.

**List of reference signs**

| | |
|---|---|
| 1 | Device for cutting a workpiece |
| 2 | Plasma arc |
| 3 | Gas supply system |
| 11 | Electrode |
| 12 | Conduit |
| 13 | Wall |
| 14 | Electrode holder |
| 15 | Emissive insert |
| 16 | Nozzle |
| 17 | Tip |
| 18 | Opening |
| 30 | Gas flow |
| 31 | Pre gas flow |
| 32 | Main gas flow |
| 33 | Post gas flow |
| 34a | First gas reservoir |
| 34b | Second gas reservoir |
| 35 | Gas line |
| 36a | First valve |
| 36b | Second valve |
| 40 | Workpiece |
| 41 | Cutting position |
| 50 | Voltage source |
| 51 | Wiring |
| L | Longitudinal axis |

## Claims

1. A method for cutting a workpiece (40) by means of a plasma arc (2), wherein
- a device (1) for cutting a workpiece (40) comprising an electrode (11) for generating a plasma arc (2) and a gas supply system (3) for providing a gas flow (30) around the electrode (11) is provided, wherein
- a pre gas flow (31) is provided around the electrode (11),
- subsequently to the pre gas flow (31), a main gas flow (32) is provided around the electrode (11), wherein the main gas flow (32) comprises an oxidizing gas at a concentration above 10000 ppm,
- a plasma arc (2) is generated between the electrode (11) and the workpiece (40), wherein said workpiece (40) is cut by means of said plasma arc (2),
**wherein**
said pre gas flow (31) comprises an oxidizing gas at a concentration of 50 ppm to 10000 ppm.

2. The method according to claim 1, wherein subsequently to the main gas flow (32), a post gas flow (33) is provided around the electrode (11), wherein said post gas flow (33) comprises an oxidizing gas at a concentration of 50 ppm to 10000 ppm.

3. The method according to claim 1 or 2, wherein the concentration of said oxidizing gas in said pre gas flow (31) and/or said post gas flow (33) is 50 ppm to 5000 ppm.

4. The method according to one of the preceding claims, wherein the concentration of said oxidizing gas in said pre gas flow (31) and/or said post gas flow (33) is 100 ppm to 1500 ppm.

5. The method according to one of the preceding claims, wherein said oxidizing gas is selected from the group consisting of oxygen (O₂), nitrogen monoxide (NO), nitrogen dioxide (NO₂), and ozone (O₃).

6. The method according to one of the preceding claims, wherein said oxidizing gas in said pre gas flow (31) and/or said post gas flow (33) is oxygen (O₂).

7. The method according to one of the preceding claims, wherein said pre gas flow (31) and/or said post gas flow (33) further comprises an inert gas.

8. The method according to claim 7, wherein said inert gas is nitrogen (N₂) or argon (Ar).

9. The method according to one of the preceding claims, wherein said electrode (11) comprises an emissive element (15), wherein said emissive element (15) is formed from hafnium, a hafnium alloy, zirconium, or a zirconium alloy.

10. The method according to one of the preceding claims, wherein a current is provided at the electrode (11), and wherein
- the current is 30 A to 400 A, wherein the concentration of the oxidizing gas in the pre gas flow (31) and/or the post gas flow (33) is 50 ppm to 1500 ppm, or wherein
- the current is 200 A to 600 A, wherein the concentration of the oxidizing gas in the pre gas flow (31) and/or the post gas flow (33) is 500 ppm to 10000 ppm.

11. The method according to one of the preceding claims, wherein a current provided at the electrode (11) is increased while the pre gas flow (31) is provided, and/or wherein a current provided at the electrode (11) is decreased while the post gas flow (33) is provided.

12. The method according to claim 11, wherein
- said current is increased at a rate of 50 A/s to 800 A/s, wherein the concentration of the oxidizing gas in the pre gas flow (31) is 50 ppm to 5000 ppm, or wherein
- said current is increased at a rate of 300 A/s to 1000 A/s, wherein the concentration of the oxidizing gas in the pre gas flow (31) is 500 ppm to 10000 ppm.

13. The method according to claim 11, wherein
- said current is decreased at a rate of 100 A/s to 600 A/s, wherein the concentration of the oxidizing gas in the post gas flow (33) is 50 ppm to 5000 ppm, or wherein
- said current is decreased at a rate of 300 A/s to 1000 A/s, wherein the concentration of the oxidizing gas in the post gas flow (33) is 500 ppm to 10000 ppm.

14. The method according to one of the claims 11 to 13, wherein said current is increased or decreased according to a linear, non-linear, exponential or polynomial function.

15. A device (1) for cutting a workpiece (40) by means of a plasma arc (2), particularly for performing a method according to one of the claims 1 to 14, wherein the device (1) comprises an electrode (11) for generating a plasma arc (2) and a gas supply system (3) for providing a gas flow around the electrode (11),
Wherein
said device (1) is adapted to provide a pre gas flow (31) around the electrode (11), provide a main gas flow (32) around the electrode (11) subsequently to the pre gas flow (31), wherein the main gas flow (32) comprises an oxidizing gas at a concentration above 10000 ppm, and generate a plasma arc (2) between the electrode (11) and a workpiece (40), wherein said workpiece (40) is cut by means of said plasma arc (2), and wherein said pre gas flow (31) comprises an oxidizing gas at a concentration of 50 ppm to 10000 ppm.
